Europäisches Patentamt

European Patent Office

Office européen des brevets

(11) Veröffentlichungsnummer: **0 305 390**
**B1**

(12) **EUROPÄISCHE PATENTSCHRIFT**

(45) Veröffentlichungstag der Patentschrift: 04.04.90

(21) Anmeldenummer: 87903285.2

(22) Anmeldetag: 23.04.87

(86) Internationale Anmeldenummer:
PCT/EP87/00220

(87) Internationale Veröffentlichungsnummer:
WO 87/06670 05.11.87 Gazette 87/24

(51) Int. Cl.⁵: **F 16 H 61/16**

(54) **ELEKTRO-HYDRAULISCHE STEUERUNG FÜR EIN AUTOMATGETRIEBE.**

(30) Priorität: 02.05.86 PCt/ep86/00261

(43) Veröffentlichungstag der Anmeldung:
08.03.89 Patentblatt 89/10

(45) Bekanntmachung des Hinweises auf die
Patenterteilung:
04.04.90 Patentblatt 90/14

(84) Benannte Vertragsstaaten:
DE FR GB SE

(56) Entgegenhaltungen:
EP-A-0 179 683
US-A-4 395 926

ATZ Automobiltechnische Zeitschrift, Band 85,
Nr. 6, 1983, K. Lorenz et al.: "Einsatz des
Viergang-Automatikgetriebes 4 HP 22 mit
elektronisch-hydraulischer Steuerung", Seiten
401-405

(73) Patentinhaber: ZAHNRADFABRIK
FRIEDRICHSHAFEN AKTIENGESELLSCHAFT
Löwentaler Strasse 100 Postfach 2520
D-7990 Friedrichshafen 1 (DE)

(72) Erfinder: GIERER, Georg
Seestrasse 28
D-7993 Kressbronn (DE)

(74) Vertreter: Raue, Reimund
Zahnradfabrik Friedrichshafen AG Löwentaler
Strasse 100 Postfach 2520
D-7990 Friedrichshafen 1 (DE)

## Beschreibung

Diese Erfindung betrifft eine elektro-hydrolische Steuerung für ein Automatgetriebe nach dem Oberbegriff von Anspruch 1.

Bei Automatgetrieben sind im Rahmen von Sicherheitsfunktionen Einrichtungen bekannt, die eine Schaltung in den Rückwärtsgang bei Umstellung des Wählschiebers durch den Fahrer in die Position R dann verhindern, wenn eine noch zu hohe Vorwärtsfahrgeschwindigkeit anliegt, also das Fahrzeug noch zu schnell vorwärtsrollt. Solche Einrichtungen sind trotz eines erhöhten Bauaufwandes notwendig, um Beschädigungen im Antriebsstrang, vorrangig im Getriebe, bei unzulässigen Schaltungen in den R.-Gang zu vermeiden.

Bei einem bekannten Automatgetriebe 4 HP 22 mit einer elektronisch-hydraulischen Steuerung — ATZ 85 (1983) 6 Seite 401 bis 405 — wird z.B. durch die Anordnung eines zusätzlichen Magnetventiles und eines gesondert nur für diesen Zweck angeordneten Rückwärtsgang-Sicherheitsventiles eine solch unzulässige Schaltung vermieden.

Diese Einrichtung hat sich bewährt, weil z.B. alle Verstellungen des Wählschiebers in den Rückwärtsgang zu keiner Schaltung im Getriebe führen, solange das Fahrzeug noch mit einer Geschwindigkeit, z.B. oberhalb 8 km/h, vorwärtsrollt. Der Bauaufwand ist jedoch relativ hoch.

Auch aus der EP—A—179 683 ist eine Steuerung eines Automatgetriebes bekannt, bei der dieses bei einer fehlerhaften Verstellung des R-Ganghebels vor einer Beschädigung geschützt wird.

Zur Schaltung von 4 Gängen sind auch 4 Magnetventile und 4 diesen zugeordneten Stellschieber sowie 2 weitere Schaltventile nötig.

Wenn dieser Steuereinrichtung zur R-Gangsicherung auch kein Magnetventil zugeordnet ist, so ergibt sich doch zur Realisierung dieser Sicherung ein sehr hoher Bauaufwand.

Es ist deshalb Aufgabe der Erfindung, eine elektro-hydraulische Steuerung nach dem Oberbegriff von Anspruch 1 weiterzuentwickeln und den Bauaufwand zu reduzieren, ohne daß die Sicherheitsfunktion bei unzulässigen Schaltungen in den R-Gang beeinträchtigt werden.

Diese Aufgabe wird mit den kennzeichnenden Merkmalen vom Anspruch 1 erfüllt.

Nur durch die geschickte Anordnung von Magnet- und Schaltventilen, z.B. des Schaltventiles 1—2 und des ersten Magnetventiles und deren Nutzung auch für den R-Gang, ist es möglich, ein Magnetventil und ein R.-Gang-Sicherungsventil einzusparen. Durch die Ansprüche 2 bis 5 wird die Erfindung besonders vorteilhaft ausgestaltet. Nach dem dargestellten Beispiel muß lediglich im Schaltventil 1—2 der Kolbenschieber um einen Steuerkolben erweitert werden. Insgesamt ergibt sich durch die Doppelnutzung von einem Schalt- und einem Magnetventil eine erhebliche Einsparung.

Weitere Einzelheiten der Erfindung werden anhand von Zeichnungen und Ausführungsbeispielen erläutert. Es zeigen:

Fig. 1 ein Automatgetriebe in schematischer Darstellung,

Fig. 2 eine Tabelle über die eingeschalteten Kupplungen, Bremsen und Magnetventile in den einzelnen Gängen,

Fig. 3 ein vereinfacht dargestelltes Steuerschema mit der R.-Gang-Sicherung.

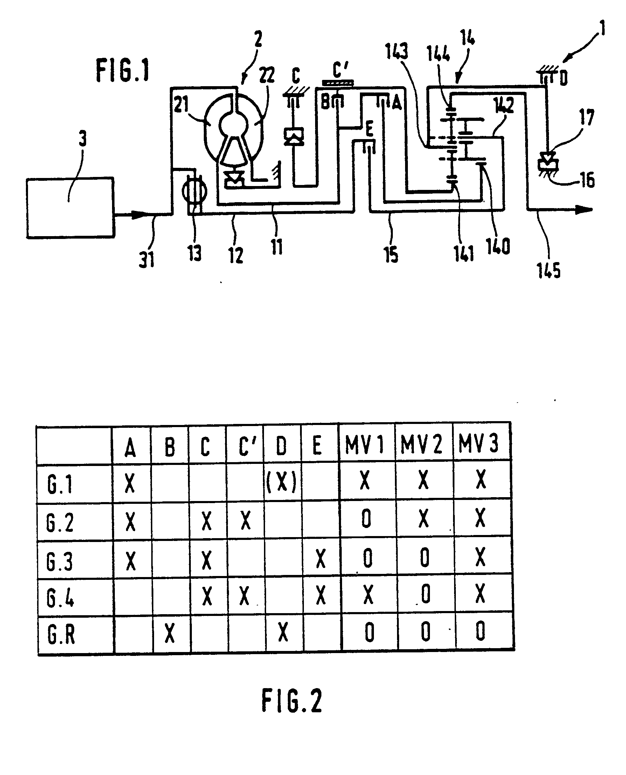

In Fig. 1 ist ein Beispiel eines Automatgetriebes dargestellt, bei dem ein Antriebsmotor 3 über eine Antreibswelle 31 einmal mit der Pumpe 22 einer hydro-dynamischen Einheit 2 und zum anderen über einen Dämpfer 13 mit einer zweiten Getriebeeingangswelle 12 verbunden, an deren Ende eine Kupplung E angeordnet ist und über eine innere Welle 15 zu einem Steg 142 eines reduzierten Planetenkoppelgetriebes 14 führt. Die erste Getriebeeingangswelle 1 führt von der Turbine 21 der hydro-dynamischen Einheit 2 zu den Kupplungen A und B, deren andere Hälfte mit je einem Sonnenrad 140, 141 des reduzierten Planetenkoppelgetriebes 14 verbunden ist. An der zweiten Hälfte der Kupplung B ist noch eine Bremse C' und über einen Freilauf eine weitere Bremse C angeordnet. Der zweite Steg 143 des reduzierten Planetenkoppelgetriebes 14 ist mit einem am Getriebegehäuse 16 abgestützten Freilauf 17 und einer Bremse D verbunden und der Abtrieb aus dem Getriebe 1 erfolgt über das Hohlrad 144 des reduzierten Planetenkoppelgetriebes 14.

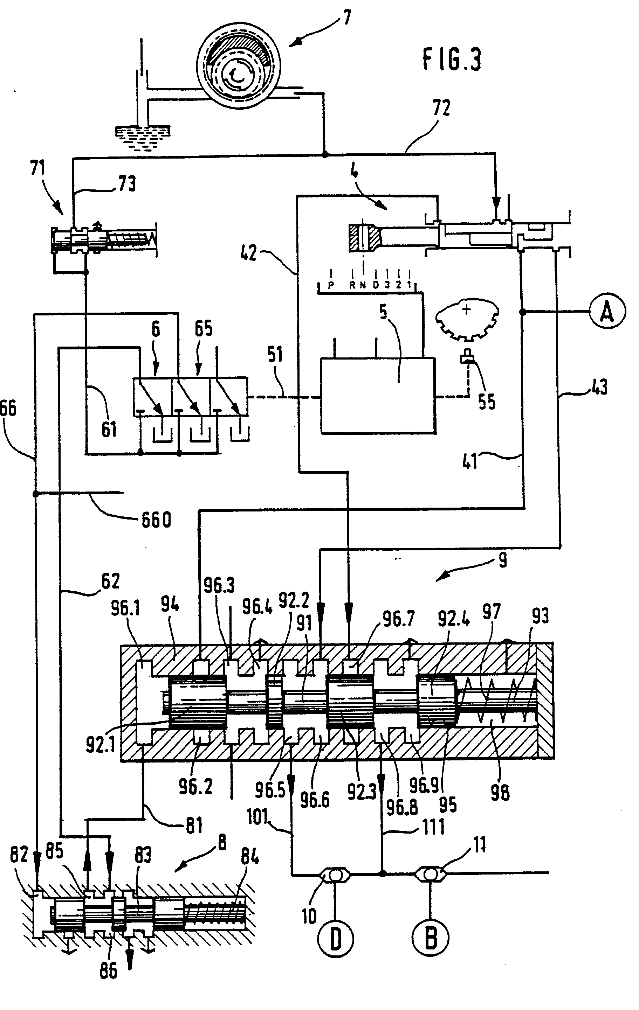

Aus der Tabelle nach Fig. 2 ist leicht ableitbar, welche Kupplungen und Bremsen A—E und Magnetventile MV1—MV3 in den einzelnen Gängen geschlossen sind und von der elektro-hydraulischen Steuerung, und im Falle der Magnetventile, von dem elektronischen Steuergerät 5 ein- ausgeschaltet und in bezug auf die Kupplung und Bremsen mit Systemdruck beaufschlagt werden. In dem reduziert dargestellten Steuerschema nach Fig. 3 ist das elektronische Steuergerät 5 mit den Magnetventilen 6, 65 elektrisch verbunden. Ein von einer Druckmittelquelle 7 erzeugter Systemdruck wird einmal über die Leitung 72 zum Wählschieber 4 und über die Leitung 73 zum Druckreduzierventil 71 geleitet. Über die Leitung 61 wird dieser reduzierte Druck als Steuerdruck den Magnetventilen, z.B. Magnetventil 6, 65, zugeführt. Ist das zweite Magnetventil 65 eingeschaltet, wird dieser Steuerdruck über die Leitung 66 zur Schaltung eines Steuerventils 8 in den linken stirnseitigen Ringraum 82 geleitet, so daß der Kolbenschieber 83 gegen den Druck einer Feder 84 in eine axiale Endlage (wie dargestellt) gebracht wird. Über eine weitere Leitung 660 wird auch ein nicht dargestelltes Schaltventil 2—3 umgesteuert. Bei geschaltetem ersten Magnetventil 6 wird über die Leitung 62 Steuerdruck über den dritten und zweiten Ringraum 86, 85 und die Steuerleitung 81, Steuerdruck auch dem stirnseitigen Ringraum 96.1 des Schaltventiles 9 (Schaltventil 1—2) zugeleitet. Dieses Schaltventil 9 wird neben der Umschaltung von Gang 1 und 2 auch noch als R.-Gang-Sicherung genützt und besteht aus einem Kolbenschieber 91 mit vier Steuerkolben 92.1—92.4, der in einer Bohrung 95 in einem Gehäuse 94 axial verschiebbar gelagert ist, wobei die Steuerkolben mit neun Ringräumen 96.1—96.6 zusammenwirken. Der Steuerkolben wird ohne Beaufschlagung mit Steuerdruck von einer Feder 97, die um einen Anschlagbolzen 93 angeordnet ist, in der linken Endlage gehalten und vom Steuerdruck über den stirnseitigen Ringraum 96.1 in die rechte Endlage gebracht. Vom Wählschieber 4 führen Leitungen 41, 42, 43 zum zweiten 96.2, zum siebten 96.7 und sechsten Ringraum 96.6. Die Leitung 41 hat gleichzeitig noch eine Verbindung zur Kupplung A. Der vierte und neunte Ringraum 96.4; 96.9 sowie der Federraum 98 ist entlüftet und vom fünften Ringraum 96.5 führt eine Leitung 101 zum Kugelventil 10 und zur Bremse D. Der achte Ringraum 96.8 ist über die Leitung 111 und das Kugelventil 10 mit der Bremse D und über das Kugelventil 11 mit der Kupplung B verbunden.

Die R.-Gang-Sicherung über das Magnetventil 6 und das Schaltventil 9 wirkt wie folgt:

Mit der Umstellung des Wählschiebers 4 in die Position R wird Systemdruck von der Druckmittelquelle 7 über die Leitung 72 und 42 dem siebten Ringraum 96.7 dem Schaltventil 9 zugeleitet, der oberhalb einer definierten Vorwärtsfahrgeschwindigkeit durch den dritten Steuerkolben 92.3 versperrt ist.

Das elektronische Steuergerät 5 erkennt die Fahrgeschwindigkeit über einen Sensor 55 an der z.B. Getriebeabtriebswelle 145. Ist die definierte Vorwärtsfahrgeschwindigkeit beim Umschalten in den R.-Gang jedoch erreicht oder unterschritten, schaltet das elektronische Steuergerät 5 das erste Magnetventil 6 ab. Die Abschaltung des ersten Magnetventiles erfolgt auch, wenn nach einer Umstellung in den R.-Gang die definierte Fahrgeschwindigkeit erst zeitverzögert erreicht wird. Der stirnseitige Ringraum 96.1 wird dann über die Steuerleitung 81, Steuerventil 8 und Leitung 62, entlüftet und die Feder 97 verstellt den Kolbenschieber 91 in die linke Endstellung. Zwische dem dritten 92.3 und vierten 92.4 Steuerkolben wird eine Verbindung vom siebten 96.7 zum achten 96.8 Ringraum hergestellt, so daß Systemdruck über die Leitung 111 und die beiden Kugelventile 10 und 11 zu der Bremse D und Kupplung B, die eine Rückwärtsfahrt bewirken, geleitet wird.

**Patentansprüche**

1. Elektro-hydraulische Steuerung für ein Automatgetriebe (1) mit einem Wählschieber (4), zumindest für die Neutralstellung (N) sowie die Vorwärts- (D) und Rückwärtsfahrt (R), einem elektronischen Steuergerät (5), das auch mit einem Sensor (55) zur Erfassung der Getriebeabtriebsdrehzahl verbunden ist, mit Federkraft in Neutralstellung gehaltenen Magnetventilen (6, 65), einer Druckmittelquelle (7), Drucksteuer- (8) und Schaltventilen (9) und Dämpfern zur Betätigung von Gangschaltkupplungen und Bremsen (A—E) sowie mit einer Sicherheitseinrichtung zur Verhinderung von Schaltungen in den R.-Gang bei noch zu hoher Vorwärtsfahrgeschwindigkeit, dadurch gekennzeichnet, daß für ein 4-Gang-Automatgetriebe (1) nur drei Magnetventile (6, 65, 68) angeordnet sind und daß beim verstellen des Wählschiebers (4) von der Vorwärtsfahrstellung (D, 1, 2, 3) in die Stellung für den Rückwärtsgang (R) zur Sicherung der Umschaltung ein 1—2 Schaltventil (9), das für Schaltungen der Gänge 1 und 2 angeordnet ist, noch als R.-Gang-Sicherung benutzt wird.

2. Elektro-hydraulische Steuerung nach Anspruch 1, dadurch gekennzeichnet, daß das hydraulische Schaltventil (9) einen Kolbenschieber (91) mit vier Steuerkolben (92.1—92.4) und einen Anschlagbolzen (93) hat, der in einem Gehäuse (94) mit einer Bohrung (95) und neun Ringräumen (96.1—96.9) axial verschiebbar angeordnet ist und von einer Druckfeder (97), die um den Anschlagbolzen (93) angeordnet ist, in eine Endlage gedrückt wird, daß die Steuerkolben (92.1—92.4) mit den Ringräumen (96.1—96.9) zusammenwirken, in die Leitungen führen oder die entlüftet sind.

3. Elektro-hydraulische Steuerung nach Anspruch 2, dadurch gekennzeichnet, daß

der erste, stirnseitig angeordnete Ringraum (96.1) zur Beaufschlagung mit Steuerdruck über eine Steuerleitung (81) und ein Steuerventil (8) sowie eine Leitung (62) mit einem ersten Magnetventil (6) verbunden ist,

über den Wählschieber (4) in der Stellung (D) auch eine Leitung (41) mit dem zweiten Ringraum (96.2) und der Kupplung (A) in der Stellung 1. Gang über die Leitung (43) mit dem sechsten Ringraum (96.6) und in der Stellung (R) über eine Leitung (42) in den siebten Ringraum (96.7) Systemdruck gefördert wird,

aus dem dritten Ringraum (96.3) Leitungen zu weiteren Schaltventilen und Kupplungen führen,

der vierte (96.4) und neunte Ringraum (96.9) sowie der Federraum (98) entlüftet sind,

der fünfte Ringraum (96.5) über eine Leitung (101) und ein Kugelventil (10) mit der Bremse (D) und

der achte Ringraum (96.8) über eine Leitung (111) und ein Kugelventil (11) mit der Kupplung (B) und über das Kugelventil (10) mit der Bremse (D) verbunden ist.

4. Elektro-hydraulische Steuerung nach Anspruch 3, dadurch gekennzeichnet, daß bei Verstellung des Wählschiebers (4) von der Vorwärtsfahrt (D; Gang 1) in die Rückwärtsfahrstellung (R) oberhalb einer definierten Vorwärtsfahrgeschwindigkeit das Schaltventil (9) in der rechten Endstellung verbleibt und damit die Zufuhr von Betriebsdruck über die Leitung (42) und den siebten Ringraum (96.7) durch den dritten Steuerkolben (92.3) zu der R.-Gang-Kupplung (B) und -Bremse (D) abgesperrt ist.

5. Elektro-hydraulische Steuerung nach Anspruch 3, dadurch gekennzeichnet, daß beim Verstellen des Wählschiebers (4) von der Vorwärtsfahrt (D; Gang 1) in die Rückwärtsfahrstellung (R) unterhalb einer definierten Vorwärtsfahrgeschwindigkeit das Magnetventil (6) über das elektronische Steuergerät (5) abgeschaltet und die Leitung (62) und über das Steuerventil (8) auch die Leitung (81) und der stirnseitige Ringraum (96.1) entlüftet wird, der Kolbenschieber (91) wird von der Druckfeder (97) in die linke Endstellung gedrückt und der Betriebsdruck kann vom siebten Ringraum (96.7) über den achten Ringraum (96.8) und die Leitung (111) und beide Kugelventile (10, 11) sowohl die R.-Gang-Kupplung (B) wie auch die -Bremse (D) schließen.

**Revendications**

1. Commande électro-hydraulique pour une transmission automatique (1), comportant un tiroir de sélection (4) au moins pour les positions de point mort (N), de marche avant (D) et de marche arriève (R), un appareil électronique de commande (5) relié aussi à un capteur (55) de mesure de la vitesse de rotation en sortie de la transmission, des électrovannes (6, 65) maintenues en position neutre par la force de ressorts, une source de fluide sous pression (7), des soupapes de commande de pression (8) et de changement de rapport (9) ainsi que des organes amortisseurs pour actionner des embrayages et freins (A—E) de changement de rapports, et comportant également un dispositif de sécurité pour empêcher d'enclencher la marche arrière à une trop grande vitesse de marche avant, caractérisée en ce que seulement trois électrovannes (6, 65, 68) sont prévues pour une transmission automatique (1) à quatre rapports, et en ce que, pour assurer la sécurité de la commutation, en cas de déplacement du tiroir de sélection (4) de la position de marche avant (D, 1, 2, 3) à la position de marche arrière (R), une soupape de commande de changement de rapport 1—2 (9), qui est prévue pour commander les rapports 1 et 2, est utilisée en outre comme organe de protection du rapport de marche arrière.

2. Commande électro-hydraulique selon la revendication 1, caractérisée en ce que la soupape hydraulique de commande de changement de rapport (9) comporte un tiroir (91) à quatre pistons de commande (92.1—92.4) et une tige de butée (93) ce tiroir étant coulissant axialement dans un corps (94) pourvu d'un alésage (95) et de neuf chambres annulaires (96.1—96.9) et étant poussé jusqu'à une position extrême par un ressort de compression (97) disposé autour de la tige de butée (93), et en ce que les pistons de commande (91.2—92.4) coopèrent avec les chambres annulaires (96.1—96.9) qui sont reliées à des conduites ou qui sont mises en décharge.

3. Commande électro-hydraulique selon la revendication 2, caractérisée en ce que:
la première chambre annulaire (96.1), disposée du côté d'une face frontale, est reliée à une première électrovanne (6) au moyen d'une conduite de commande (81), d'une soupape de commande (8) et d'une conduite (62), pour recevoir une pression de commande,

par le tiroir de sélection (4), une pression d'alimentation est transmise par une conduite (41) à la deuxième chambre annulaire (96.2) et à l'embrayage (A) dans la position de marche avant (D), par la conduite (43) à la sixième chambre annulaire (96.6) dans la position de premier rapport, et par une conduite (42) dans la septième chambre annulaire (96.7) dans la position de marche arrière (R),
des conduites mènent de la troisième chambre annulaire (96.3) à d'autres soupapes de commande et embrayages,
la quatrième (96.4) et le neuvième chambre annulaire (96.9), ainsi que la chambre à ressort (98), sont mises en décharge,
la cinquième chambre annulaire (96.5) est reliée au frein (D) par une conduite (101) et une soupape à bille (10), et
la huitième chambre annulaire (96.8) est reliée à l'embrayage (B) par une conduite (111) et une soupape à bille (11), et au frein (D) par la soupape à bille (10).

4. Commande électro-hydraulique selon la revendication 3, caractérisée en ce que, en cas de déplacement du tiroir de sélection (4) de la marche avant (D; rapport 1) à la position de marche arrière (R) au-dessus d'une vitesse prédéfinie de marche avant, la soupape de commande de changement de rapport (9) reste dans sa position extrême de droite, de sorte que la transmission de la pression d'actionnement au frein (B) et à l'embrayage (D) de marche arrière par la conduite (42) et la septième chambre annulaire (96.7) est bloquée par le troisième piston de commande (92.3).

5. Commande électro-hydraulique selon la revendication 3, caractérisée en ce que, en cas de déplacement du tiroir de sélection (4) de la marche avant (D; rapport 1) à la position de marche arrière (R) au-dessous d'une vitesse prédéfinie de marche avant, l'électrovanne (6) est désactivée par l'appareil électronique de commande (5) et met en décharge la conduite (62) et, par la soupape de commande (8), la conduite (81) et la chambre annulaire du côté frontal (96.1), le tiroir à pistons (91) est poussé par le ressort de compression (97) jusqu'à sa position extrême de gauche, et la pression d'actionnement peut fermer à la fois l'embrayage (B) et le frein (D) de marche arrière en se transmettant de la septième chambre annulaire (9.7) par la huitième (9.8), la conduite (111) et les deux soupapes à bille (10, 11).

**Claims**

1. Electro-hydraulic control for an automatic transmission (1) comprising a selector slide (4), at least for the neutral position (N) and for forward (D) and reverse (R) drive, an electronic control device (5), which is also connected with a sensor (55) for recording the gear output speed, solenoid valves (6, 65) held in neutral position by spring force, a pressure medium source (7), pressure control (8) and switch valves (9) and dampers for operating gear-shift clutches and brakes (A—E) and a safety arrangement for preventing shifts into reverse when the forward driving speed is too high, characterised in that only three solenoid valves (6, 65, 68) are provided for a 4-gear automatic transmission (1) and that when the selector slide (4) is shifted from the forward-drive position (D, 1, 2, 3) into the position for reverse (R), a 1—2 switch valve (9) provided for shifting gear 1 and 2 is also used as reverse gear safeguard.

2. Electro-hydraulic control according to claim 1, characterised in that the hydraulic switch valve (9) is comprised of a piston slide (91) with four control pistons (92.1—92.4) and a stop bolt (93) axially movable in a housing (94) having a bore (95) and nine annular chambers (96.1—96.9), and is forced into an end position by a pressure spring (97) arranged around the stop bolt (93), in that the control pistons (92.1—92.4) cooperate with annular chambers (96.1—96.9) which have lines connected to them or which are vented.

3. Electro-hydraulic control according to claim 2, characterised in that

the first frontal annular chamber (96.1), for admission of control pressure, is connected via a control line (81) and a control valve (8) and a line (62) with a first solenoid valve (6),

system pressure is supplied via selector slide (4) in position (D) also through a line (41) connected with the second annular chamber (96.2) and with the clutch (A) in the 1st gear position via the line (43) connected to the sixth annular chamber (96.6) and in position (R) via a line (42) into the seventh annular chamber (96.7),

lines lead from the third annular chamber (96.3) to further switch valves and clutches,

the fourth (96.4) and ninth annular chamber (96.9) and the spring chamber (98) are vented,

the fifth annular chamber (96.5) is connected via a line (101) and a ball valve (10) to the brake (D) and

the eighth annular chamber (96.8) is connected via a line (111) and a ball valve (11) to the clutch (B) and via the ball valve (10) to the brake (D).

4. Electro-hydraulic control according to claim 3, characterised in that when the selector slide (4) is shifted from forward drive (D; gear 1) into reverse drive position (R) above a defined forward drive speed the switch valve (9) remains in the righthand end position thus blocking the supply of operating pressure via the line (42) and the seventh annular chamber (96.7) by the third control piston (92.3) to the reverse gear clutch (B) and the brake (D).

5. Electro-hydraulic control according to claim 3, characterised in that, when the selector slide (4) is shifted from forward drive (D; gear 1) into reverse drive position (R) below a defined forward drive speed, the solenoid valve (6) is disconnected by the electronic control device (5) and line (62) and line (81) via the frontal annular chamber (96.1) are vented, the piston slide (91) is forced into the lefthand end position by the pressure spring (97) and the operating pressure can close both the reverse drive clutch (B) and the brake (D) via the eighth annular chamber (96.8) and the line (111) and the two ball valves (10, 11).

FIG.1

FIG.2

| | A | B | C | C' | D | E | MV 1 | MV 2 | MV 3 |
|-----|---|---|---|----|-----|---|------|------|------|
| G.1 | X | | | | (X) | | X | X | X |
| G.2 | X | | X | X | | | 0 | X | X |
| G.3 | X | | X | | | X | 0 | 0 | X |
| G.4 | | | X | X | | X | X | 0 | X |
| G.R | | X | | | X | | 0 | 0 | 0 |

**EP  0 305 390  B1**

FIG.3